# EUROPEAN PATENT APPLICATION

(11) **EP 4 349 181 A1**
(43) Date of publication of application: **10.04.2024**
(21) Application number: 22815707.9
(22) Date of filing: 31.03.2022
(51) Int. Cl.: A23L 29/231, A23L 29/238, A23L 29/256, A23L 29/269, A23L 29/281, A23L 33/17

(54) **NUTRITIONAL COMPOSITION**

(30) Priority: 31.05.2021 JP 2021091781
(71) Applicant: Nutri Co., Ltd., Mie 510-0013 (JP)
(72) Inventor: KAWAGUCHI, Susumu, Yokkaichi-shi, Mie 510-0013 (JP); ABURAI, Akira, Yokkaichi-shi, Mie 510-0013 (JP); NAKAMURA, Naomi, Kyoto-shi, Kyoto 601-8550 (JP); KAWAKAMI, Keishi, Kyoto-shi, Kyoto 601-8550 (JP); MORITA, Masao, Kyoto-shi, Kyoto 601-8550 (JP)
(74) Representative: Hoffmann Eitle
(86) International application number: PCT/JP2022/016652
(87) International publication number: WO 2022/254950

(57) **Abstract**

For providing a nutritional composition in an easily administered or ingestible form, that does not exhibit significant viscosity decrease under acidity (when mixed with gastric juice) and contains excellent nutrients, the nutritional composition according to one embodiment of the present invention is a nutritional composition containing casein, collagen, and a thickener, wherein the thickener is not gelled by cooling after heating, and is acid-soluble.

## Description

### TECHNICAL FIELD

The present disclosure relates to a high-quality nutritional composition which suppresses the occurrence of gastroesophageal reflux, diarrhea, or the like.

### BACKGROUND ART

Conventionally, various nutritional compositions for tube feeding have been proposed for persons with difficulty in oral ingestion due to old age, injury and disease, and disorder. When the above nutritional compositions enter the stomach and are mixed with the gastric juice, the viscosity of the compositions significantly decreases and gastroesophageal reflux or diarrhea may possibly be caused. Therefore, in recent years, various investigations have been made for prolonging gastric residence time of the composition while having the form easy for tube feeding.

For example, PTL 1 to 6 propose to thicken or gelling the composition in the stomach by using a gelling agent (e.g., an alginate) that is gelled under acidity (when mixed with gastric juice), and additionally adding a calcium salt or magnesium salt that is solubilized under acidity to cause a reaction with the gelling agent.

When an alginate is used as the gelling agent of such a nutritional composition, it is known that if casein is used as a protein source, the alginate interacts with casein by a hydrogen bond or the like, and the casein becomes unstable. Thus, generally, soybean protein is mainly used as a protein source of nutritional compositions to achieve stability.

### RELATED ART DOCUMENT

### PATENT DOCUMENT

PTL 1: JP-A-2017-160177
PTL 2: WO-A-2012/081725
PTL 3: JP-A-2017-171592
PTL 4: WO-A-2013/146181
PTL 5: JP-A-2014-223081
PTL 6: JP-A-2018-130128

In fact, however, casein is desirable as a protein source of nursing care food and medical food due to having more excellent essential amino acid composition, and higher content of BCAA (branched chain amino acid) than soybean protein. Thus, the development of a nutritional composition, which contains casein as a protein source and has moderate viscosity under acidity, has been demanded.

### SUMMARY OF THE DISCLOSURE

### PROBLEMS TO BE SOLVED BY THE DISCLOSURE

The present disclosure provides a nutritional composition in an easily ingestible form, that does not exhibit significant viscosity decrease under acidity (when mixed with gastric juice) and contains excellent nutrients.

### MEANS FOR SOLVING THE PROBLEMS

For achieving the above objects, the present disclosure provides the following [I] to [X].
[I] A nutritional composition comprising casein, collagen, and a thickener, wherein
   the thickener is not gelled by cooling after heating, and is acid-soluble.
[II] The nutritional composition according to [I], wherein the thickener is at least one selected from the group consisting of tamarind gum, succinoglycan, tara gum, guar gum, locust bean gum, xanthan gum, and pectin.
[III] The nutritional composition according to [I] or [II], which is liquid or semi-solid.
[IV] The nutritional composition according to any one of [I] to [III], which has a pH of 5.5 to 7.5.
[V] The nutritional composition according to any one of [I] to [IV], wherein
   when a viscosity of the nutritional composition is defined as "X", and a viscosity of the nutritional composition mixed with simulated gastric juice is defined as "Y", "Y/X" is 0.8 or more.
[VI] The nutritional composition according to any one of [I] to [V], further comprising agar.
[VII] The nutritional composition according to any one of [I] to [VI], which has a viscosity of 5 to 50000 mPa·s at 25°C.
[VIII] The nutritional composition according to any one of [I] to [VII], wherein a caseinate is used as the casein.
[IX] The nutritional composition according to any one of [I] to [VIII], further comprising at least one selected from the group consisting of protein other than casein and collagen, modified starch, lipid, saccharide, vitamin, mineral, and dietary fiber.
[X] The nutritional composition according to any one of [I] to [IX], wherein the thickener is succinoglycan.

The present inventors made intensive investigations for solving the above problems. As a result, the inventors think that significant viscosity decrease under acidity (when mixed with simulated gastric juice) might be avoided by using acid aggregation properties of casein rather than achieving thickening or gelling using a gelling agent. After further investigations, the present inventors found that the above problems can be solved by using casein, collagen, and a specific thickener in combination.

### EFFECTS OF THE DISCLOSURE

The nutritional composition of the present disclosure stably contains excellent nutrients and can be easily administered by tube-feeding. Also, the viscosity of the composition is not significantly decreased under acidity (when mixed with simulated gastric juice). Thus, the occurrence of gastroesophageal reflux or diarrhea can be suppressed. Accordingly, the present composition can be preferably used as nursing care food and medical food.

### EMBODIMENTS OF THE DISCLOSURE

Hereinafter, the present disclosure will be described in more detail based on example embodiments of the present disclosure. However, the present disclosure is not limited to these embodiments.

The nutritional composition according to one embodiment of the present invention contains casein (A), collagen (B), and a thickener (C) that is not gelled by cooling after heating, and is acid-soluble. These components will be described below in detail.

### <Casein (A)>

The casein (A) is one of protein and is derived from milk. The casein (A) is generally obtained by performing processing such as separation, fractionation, and concentration of raw milk, cow milk, whole milk powder, powdered skim milk, skimmed condensed milk, butter milk, cheese, and the like (hereinafter, also referred to as "cow milk, and the like").

In particular, a water-soluble salt (caseinate), which is obtained by neutralizing separated casein with an alkali such as sodium hydroxide, is preferably used.

Examples of the above caseinate include calcium caseinate, sodium caseinate, potassium caseinate, magnesium caseinate, and the like. Among them, potassium caseinate and sodium caseinate are preferably used in view of the excellent stability. These may be used alone, or two or more of them may be used in combination.

Further, slightly hydrolyzed casein, in which functions of casein such as acid aggregation properties are not lost, can also be used. However, a highly-decomposed casein peptide that is hydrolyzed to such an extent that functions such as acid aggregation properties are lost (for example, casein peptide having an average molecular weight of less than 1000) does not exhibit the effect specific to the present disclosure. Thus, such a casein peptide is not included in the casein (A).

A content of the casein (A) relative to the entire nutritional composition is preferably in the range of 2 to 15 mass %, more preferably in the range of 3 to 10 mass %, and particularly preferably in the range of 4 to 8 mass %. When the content of the casein (A) is set within the above range, viscosity decrease or syneresis occurred when the composition is mixed with simulated gastric juice can be suppressed. Thus, a nutritional composition having smooth physical properties tends to be obtained.

A content of the casein (A) relative to the whole protein (D) is preferably 30 mass% or more, more preferably 35 to 95 mass%, still more preferably 40 to 90 mass%, further preferably 45 to 85 mass%, and furthermore preferably 65 to 80 mass%. That is, when the content ratio of the casein (A) relative to the whole protein (D) [(A)/(D)] (mass %) is set within the above range, viscosity decrease or syneresis occurred when the composition is mixed with simulated gastric juice can be suppressed. Thus, a nutritional composition having smooth physical properties tends to be obtained.

The whole protein (D) means the total of the casein (A), collagen (B), and protein other than (A) and (B). Also, in the present disclosure, a reference to the content of protein regarding the casein (A) and other protein, and the like, refers to protein actually contained in the nutritional composition. Such a protein content can be calculated based on the mass of a material used as protein and the protein content ratio (mass%) of that material.

### <Collagen (B)>

The collagen (B) is fibrous protein constituting the skin, tendon, cartilage, and the like. The collagen used in the present embodiment may be either animal-derived collagen or synthesized collagen. Not only the collagen (B) itself, but also a collagen peptide obtained by hydrolyzing the collagen (B), and atelocollagen obtained by treating collagen molecules with an enzyme to remove telopeptide site are included. Among them, the animal-derived collagen is preferred, and the collagen peptide is more preferably used. These may be used alone, or two or more of them may be used in combination.

A content of the collagen (B) relative to the entire nutritional composition is preferably in the range of 0.5 to 5 mass %, more preferably in the range of 1.5 to 3.5 mass %, and particularly preferably in the range of 1.8 to 3 mass %. When the content of the collagen (B) is set within the above range, viscosity decrease or syneresis occurred when the composition is mixed with simulated gastric juice can be suppressed. Thus, a nutritional composition having smooth physical properties tends to be obtained.

A content of the collagen (B) relative to the whole protein (D) is preferably 5 to 45 mass %, more preferably 10 to 40 mass %, and still more preferably 15 to 35 mass %. That is, when the content of the collagen (B) is set within the above range, viscosity decrease or syneresis occurred when the composition is mixed with simulated gastric juice can be suppressed. Thus, a nutritional composition having smooth physical properties tends to be obtained.

A mass ratio of the collagen (B) relative to the casein (A) [(B)/(A)] is preferably in the range of 0.05 to 1.0, more preferably in the range of 0.1 to 0.6, and particularly preferably in the range of 0.2 to 0.4. When the above ratio [(B)/(A)] is set within the above range, viscosity decrease or syneresis occurred when the composition is mixed with simulated gastric juice can be suppressed. Thus, a nutritional composition having smooth physical properties tends to be obtained.

### <Thickener (C)>

As the thickener (C), a generally used edible thickener is not gelled by cooling after heating, and is acid-soluble, is used. In the present embodiment, "is not gelled by cooling after heating" means that gel is not formed by coagulation when a solution or suspension is heated (approximately 60°C or more) and then cooled. Further, "acid-soluble" means that gelling or insolubilization does not occur at pH 5 or less.

As the thickener having such properties, in particular, natural gums are preferably used. Specifically, tamarind gum, succinoglycan, tara gum, guar gum, locust bean gum, xanthan gum, and pectin are preferably used. Among them, tamarind gum and succinoglycan are preferred, and succinoglycan is more preferably used in view of the excellent storability. These may be used alone, or two or more of them may be used in combination.

A content of the thickener (C) relative to the entire nutritional composition is preferably in the range of 0.01 to 2 mass %, more preferably in the range of 0.02 to 1 mass %, still more preferably in the range of 0.04 to 0.5 mass %, and particularly preferably in the range of 0.04 to 0.2 mass %. When the content of the thickener (C) is set within the above range, viscosity decrease or syneresis occurred when the composition is mixed with simulated gastric juice can be suppressed. Thus, a nutritional composition having smooth physical properties tends to be obtained.

Note that an alginate, which has been frequently used conventionally, is gelled by an acid, and thus does not correspond to the thickener (C) of the present embodiment. However, an alginate may be contained, without departing from the spirit of the present disclosure. When such a thickener that is gelled under acidity is contained, the content of the thickener in the entire nutritional composition is preferably 0.4 mass % or less, more preferably 0.04 mass % or less, and further preferably no such a thickener is contained.

A mass ratio of the thickener (C) relative to the casein (A) [(C)/(A)] is preferably in the range of 0.005 to 0.2, and more preferably in the range of 0.008 to 0.09. When the above ratio [(C)/(A)] is set within the above range, viscosity decrease or syneresis occurred when the composition is mixed with simulated gastric juice can be suppressed. Thus, a nutritional composition having smooth physical properties tends to be obtained.

In the nutritional composition of the present embodiment, protein other than casein and collagen, modified starch, lipid, saccharide, vitamin, mineral, dietary fiber, agar, and the like may be contained other than the casein (A), collagen (B), and specific thickener (C). Among them, modified starch, lipid, saccharide, vitamin, mineral, and dietary fiber are preferably contained. In particular, lipid, saccharide, vitamin, mineral, and dietary fiber are all contained. These may be used alone, or two or more of them may be used in combination.

### <Protein other than Casein (A) and Collagen (B)>

Examples of the "protein other than casein (A) and collagen (B)" include casein peptide, egg white protein, whey protein and a peptide thereof, and soybean protein and a peptide thereof. These may be used alone, or two or more of them may be used in combination.

A content of the protein other than (A) and (B) in the entire nutritional composition is preferably 5 mass % or less, more preferably 3 mass % or less, and further preferably 2 mass % or less. When the content of the above protein is set within the above range, viscosity decrease or syneresis occurred when the composition is mixed with simulated gastric juice can be suppressed. Thus, a nutritional composition having smooth physical properties tends to be obtained.

### <Modified Starch>

The modified starch is obtained by performing various (enzymatic, physical, or chemical) processing to starch to modify or improve the properties, or to impart or improve the functionality. Generally used edible modified starch may be used. Examples of such modified starch include hydroxypropylstarch, phosphoric acid cross-linked starch, acetylated adipic acid cross-linked starch, oxidized starch, and the like. Among them, hydroxypropylstarch and phosphoric acid-cross-linked starch are preferably used.

A content of the modified starch relative to the entire nutritional composition is preferably in the range of 0 to 2 mass %, more preferably in the range of 0.2 to 1.5 mass %, and further preferably in the range of 0.3 to 1 mass %. When the content of the modified starch is set within the above range, an emulsified state after heat sterilization tends to be stabilized.

### <Lipid>

As the lipid, generally used edible lipid may be used. Examples of such lipid include various oils, emulsifier, and the like. Examples of the above oils include vegetable oils such as perilla oil, olive oil, soybean oil, and rapeseed oil, fish oils, medium chain fatty acid triglycerides, and the like. Among them, rapeseed oil and soybean oil are preferably used. These may be used alone, or two or more of them may be used in combination.

A content of the lipid in the entire nutritional composition is preferably in the range of 1 to 10 mass %, more preferably in the range of 2 to 8 mass %, and further preferably in the range of 2.5 to 5 mass %.

### <Saccharide>

Examples of the saccharide include dextrin, which is taken into the body as food to become an energy source, and the like. Any of monosaccharides, oligosaccharides, polysaccharides, and the like may be included. The above polysaccharides include digestible polysaccharides such as starch and glycogen. These may be used alone, or two or more of them may be used in combination. Note that the above starch does not include modified starch.

### <Dietary Fiber>

Examples of the dietary fiber include a dietary fiber that cannot be digested with digestive enzymes within the body, and include both of insoluble dietary fibers and water-soluble dietary fibers. Examples of the above insoluble dietary fibers include cellulose, hemicellulose, chitin, chitosan, and the like. Examples of the above water-soluble dietary fibers include a guar gum degradation product, indigestible dextrin, glucomannan, polydextrose, and the like. Note that pectin, alginic acid, and carrageenan, which are water-soluble dietary fibers, are classified into the thickener in the present embodiment, and are not included in the dietary fiber.

A total content of the saccharide and dietary fiber (carbohydrate) in the entire nutritional composition is preferably in the range of 3 to 45 mass %, more preferably in the range of 7 to 40 mass %, and further preferably in the range of 15 to 30 mass %.

### <Vitamin and mineral>

Examples of the vitamin include water-soluble vitamin such as vitamin B complex (B1, B2, B6, B12, niacin, pantothenic acid, folic acid, and biotin) and vitamin C, and fat-soluble vitamin such as vitamin A, vitamin D, vitamin E, and vitamin K. A vitamin derivative (for example, a salt such as hydrochloride and a calcium salt) may also be used. These may be used alone, or two or more of them may be used in combination.

Examples of the mineral include macrominerals such as sodium, potassium, calcium, magnesium, and phosphorus, and microminerals such as iron, zinc, copper, manganese, iodine, selenium, chromium, and molybdenum. These minerals may be blended as an inorganic electrolyte component, or as an organic electrolyte component. These may be used alone, or two or more of them may be used in combination.

### <Agar>

In the present embodiment, agar is preferably used for adjusting the viscosity and stabilizing the form. A content of the agar in the entire nutritional composition is preferably 5 mass % or less. When the agar is used, the content thereof is preferably in the range of 0.05 to 3 mass %, more preferably in the range of 0.08 to 1 mass %, further preferably in the range of 0.09 to 0.5 mass %, and still further preferably in the range of 0.1 to 0.3 mass %. When the content of the agar is set within the above range, while the viscosity is imparted to the nutritional composition, administration by the tube feeding administration tends to become easy.

Agar is produced by freezing and drying mucilage of red algae such as tengusa (agar weed) and ogonori (Chinese moss), and mostly composed of a dietary fiber. However, in the present embodiment, agar is differently treated from the above dietary fiber, and is not included in the above dietary fiber.

Without departing from the spirit of the present disclosure, the nutritional composition of the present embodiment may contain a material generally used in processed food, other than the optional components exemplified above, in the ratio of preferably 50 mass % or less in the entire nutritional composition.

The form of the nutritional composition of the present embodiment is not particularly limited, and is particularly preferably liquid or semi-solid. That is, when the above nutritional composition is liquid or semi-solid, the composition can be easily administered or ingested, and thus is more suitable for nursing care food or medical food. In the present embodiment, a "liquid" nutritional composition refers to the composition which spreads out in a rambling manner without holding its form when the composition is allowed to stand on a flat surface. In addition, a "semi-solid" nutritional composition refers to the composition which is neither solid that keeps the form under normal temperature, nor liquid. The "semi-solid" composition is in a middle state between the liquid and solid, and flows while being assembled.

A pH of the nutritional composition of the present embodiment is preferably in the range of pH 5.5 to 7.5, more preferably in the range of pH 5.7 to 7, and further preferably in the range of pH 5.9 to 6.8. When the pH of the nutritional composition is set within the above range, viscosity decrease or syneresis occurred when the composition is mixed with simulated gastric juice can be suppressed. Thus, a nutritional composition having smooth physical properties tends to be obtained.

The nutritional composition of the present embodiment preferably has the viscosity at 25°C of 5 to 50000 mPa s, more preferably 10 to 25000 mPa·s, further preferably 100 to 10000 mPa s, and still further preferably 500 to 5000 mPa s. When the viscosity of the nutritional composition is set within the above range, administration by the tube feeding administration tends to become easy.

On the other hand, when the nutritional composition of the present embodiment is mixed with gastric juice, the composition preferably has the viscosity of 700 to 50000 mPa·s, more preferably 800 to 20000 mPa s, and further preferably 900 to 5000 mPa s. When the viscosity of the nutritional composition mixed with simulated gastric juice is set within the above range, gastroesophageal reflux or diarrhea tends to be suppressed.

In the present embodiment, when the viscosity of the nutritional composition is defined as "X", and the viscosity of the nutritional composition mixed with simulated gastric juice is defined as "Y", "Y/X" is preferably 0.8 or more, more preferably 0.9 or more, and further preferably 1.0 or more. When the "Y/X" is set within the above range, gastroesophageal reflux or diarrhea tends to be suppressed.

The above viscosity is measured by using a B-type viscometer and rotating a rotor No.6 at 12 rpm. The viscosity value is obtained after the lapse of 2 minutes from the start of rotation. The viscosity value of the simulated gastric juice mixture is obtained as follows; first, a mixture is prepared by adding 60 mL of the nutritional composition to 36 mL of the simulated gastric juice, and then the viscosity of the mixture is measured after standing the mixture at room temperature for 30 minutes.

In the present embodiment, the whole protein (D), that is a total of the casein (A), collagen (B), and protein other than (A) and (B) is preferably contained by 3 mass % or more, more preferably 4 to 15 mass %, and still more preferably 5 to 10 mass %, with respect to the entire nutritional composition.

In this configuration, owing to having an easily ingestible form, and since casein and collagen are used as protein sources, the composition is nutritionally superior to conventional nutritional compositions in which soybean protein is used as a protein source. Moreover, since the viscosity is not significantly decreased under acidity (when mixed with simulated gastric juice), the occurrence of gastroesophageal reflux or diarrhea can be suppressed. Furthermore, owing to having excellent long-term storability, the composition can be preferably used as nursing care food and medical food.

Such a nutritional composition can be produced as follows, for example. That is, the nutritional composition of the present embodiment can be obtained by preparing materials of the nutritional composition, and mixing the materials at once. Alternatively, the prepared materials may be supplied in several times to be mixed, or several species of materials may be separately mixed, and then the mixtures may be mixed together.

The nutritional composition of the present embodiment can be made storable for a further long term by filling the composition into a container, and then performing heat-sterilization or the like. Since it is possible to provide a pre-sterilized, hygienic nutritional composition in divided containers, preparation in use is not needed. Thus, the burden on a caregiver or the like can be reduced. Examples of the above container include a spout bag, pouch bag, plastic container, metal can, glass container, and the like.

### EXAMPLES

Hereinafter, the embodiments of the present invention will be specifically described by way of Examples. However, the present disclosure is by no means limited to Examples below. The following components were prepared prior to Examples and Comparative Examples. The component compositions shown below are all based on mass (mass %) unless otherwise stated.

That is, in Tables 2 to 5 shown below, numerical values represented as composition of the nutritional composition are the mass itself of each material.

On the other hand, "ratio of each protein relative to the whole protein (mass %)" is calculated from the content ratio of protein (mass %) of each material shown in Table 1 below. Materials generally used for nutritional compositions were used as the material other than those shown in Table 1 below, and ion exchange water was used as water. Further, a plural types of xanthan gums were used, and "xanthan gum a" and "xanthan gum b" differ from each other in the molecular weight ("xanthan gum a" has smaller molecular weight). As for the modified starch, hydroxypropylstarch was used as "modified starch a", and phosphoric acid cross-linked starch was used as "modified starch b".

**Table 1**

| Classification | Material name | Content ratio of protein (mass %) |
|---|---|---|
| (A) Casein | Sodium caseinate a | 89.0 |
| | Sodium caseinate b | 89.0 |
| | Sodium caseinate c | 88.0 |
| | Potassium caseinate | 89.0 |
| (B) Collagen | Bovine collagen peptide | 97.6 |
| | Pig collagen | 96.0 |
| Protein other than (A) and (B) | Soybean protein | 86.9 |
| | Casein peptide | 91.9 |
| | Whey peptide | 89.9 |

### <Examples 1 to 11, and Comparative Examples 1 to 7>

Nutritional compositions were prepared in accordance with the compositions shown in Tables 2 to 4 below. First, lipid was put into water heated to 80°C, and the casein (A), collagen (B), saccharide, and mineral were added and dissolved to prepare solutions. Then, in addition to the above solutions, agar solutions were prepared by dissolving agar, the thickener (C), thickener other than (C), and starches in water heated to 90°C. The agar solutions and other materials were added together to the above solutions, and the mixtures were stirred under the pressure of 60 MPa until uniform to prepare the nutritional compositions. The nutritional compositions were stored in sealed vessels (packed pouches), sterilized by heating at 124 °C for 15 minutes, and then provided for each Example and Comparative Example.

### <Examples 12 to 23>

Nutritional compositions were prepared in accordance to the compositions shown in Tables 4 and 5 below. First, lipid was put into water heated to 80°C, and the casein (A), collagen (B), saccharide, and mineral were added and dissolved to prepare solutions. Then, in addition to the above solutions, agar solutions were prepared by dissolving agar, the thickener (C), thickener other than (C), and starches in water heated to 90°C. The agar solutions and other materials were added together to the above solutions, and the mixtures were stirred under the pressure of 60 MPa until uniform to prepare nutritional compositions. The above nutritional compositions were stored in sealed vessels (spout bags), sterilized by heating at 124°C until the centers of the vessels reached F value of 8, and then provided for each Example.

The viscosity of the sterilized nutritional compositions before and after mixed with simulated gastric juice was measured. In Examples 11 to 23 and Comparative Examples 6 and 7, the pH was also measured. Further, in Examples 22 and 23, the storability (viscosity after storage of 2 weeks) was also evaluated. These results are shown in Tables 2 to 6 below.

The test method and evaluation method of each item are as shown below. As the simulated gastric juice, an artificial gastric juice (pH 1.2, containing 7.0 ml/L of hydrochloric acid) prepared by referencing to "6.09 Disintegration Test" in the Japanese Pharmacopoeia, Sixteenth Edition was used.

### <Viscosity of Compositions Before and After Mixed with Simulated Gastric Juice>

The viscosity (X) of the nutritional composition was measured by using a B-type viscometer and rotating a rotor No.6 at 12 rpm. The viscosity value was obtained after the lapse of 2 minutes from the start of rotation.

Meanwhile, the viscosity (Y) of the composition after mixed with simulated gastric juice was measured as described above; first, a nutritional composition mixed with simulated gastric juice was prepared by adding 60 mL of the nutritional composition to 36 mL of the simulated gastric juice, and slowly stirring the mixture until uniform, and then the viscosity of the mixture was measured after standing the mixture at room temperature for 30 minutes.

### <Storability>

The nutritional compositions of Examples 22 and 23 were stored under the environment of 40°C for 2 weeks, and the viscosity of the nutritional compositions after the storage, and after mixed with simulated gastric juice, were respectively measured.

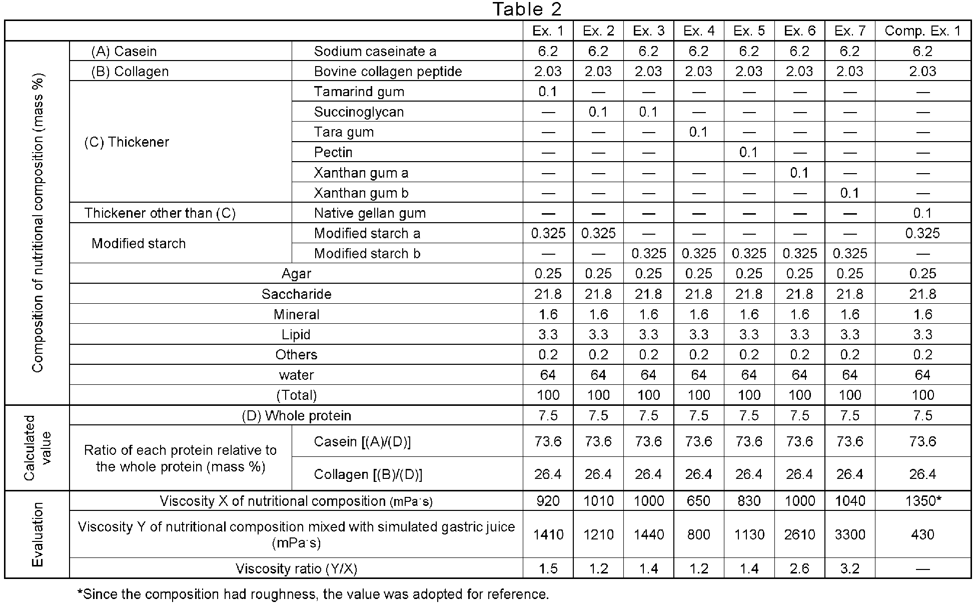

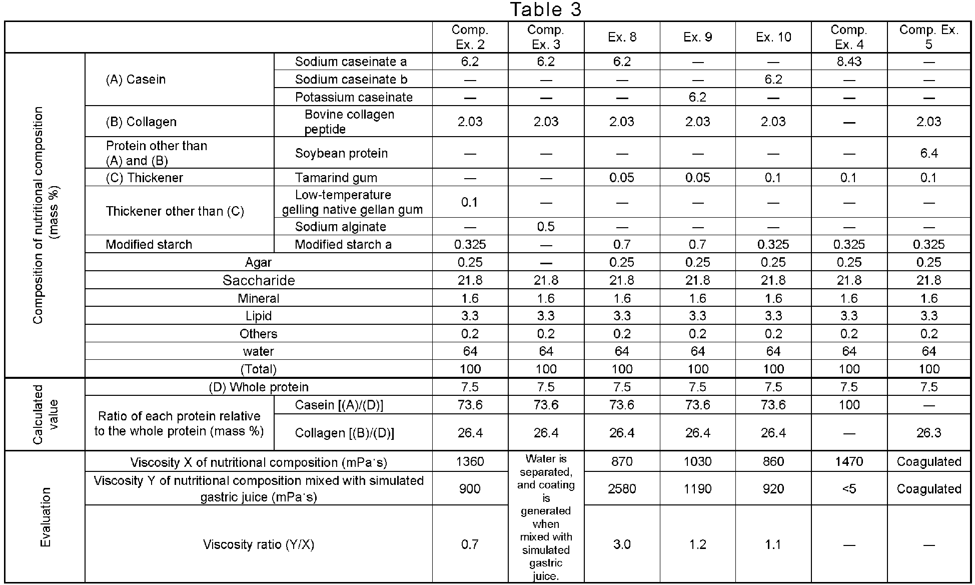

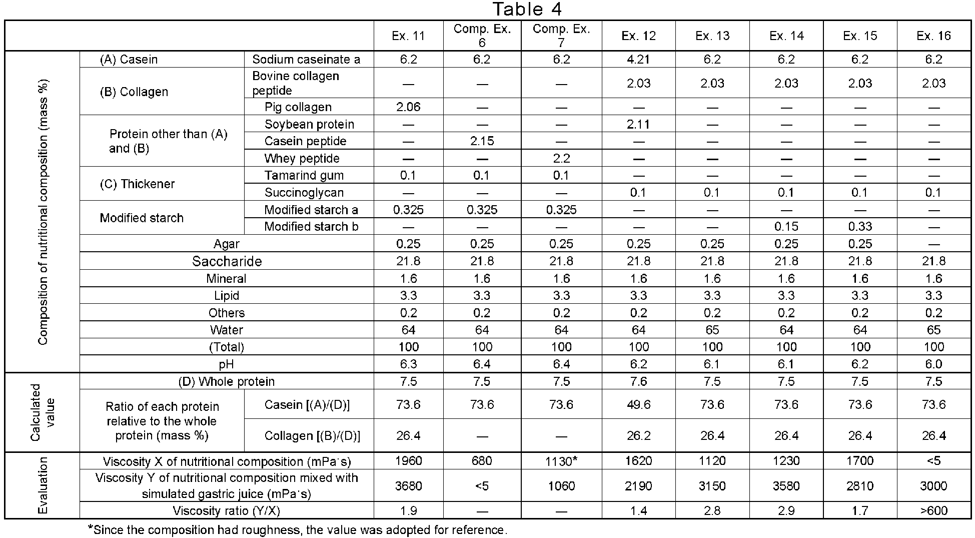

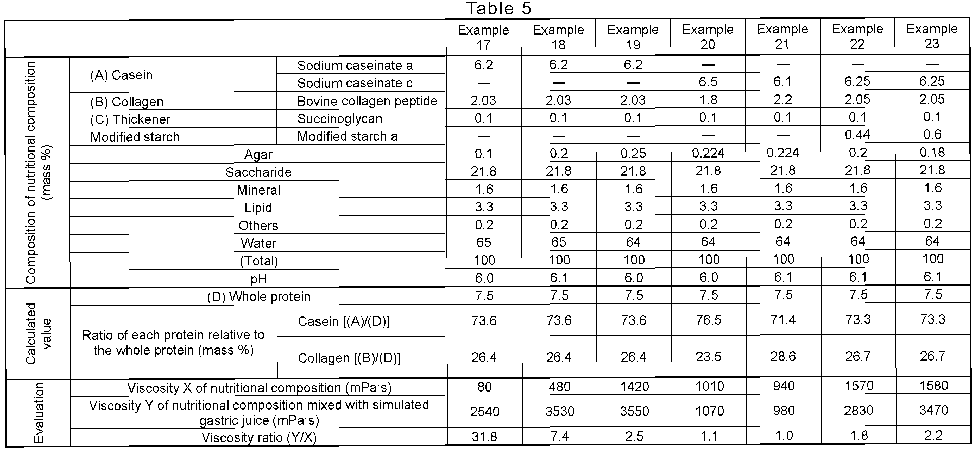

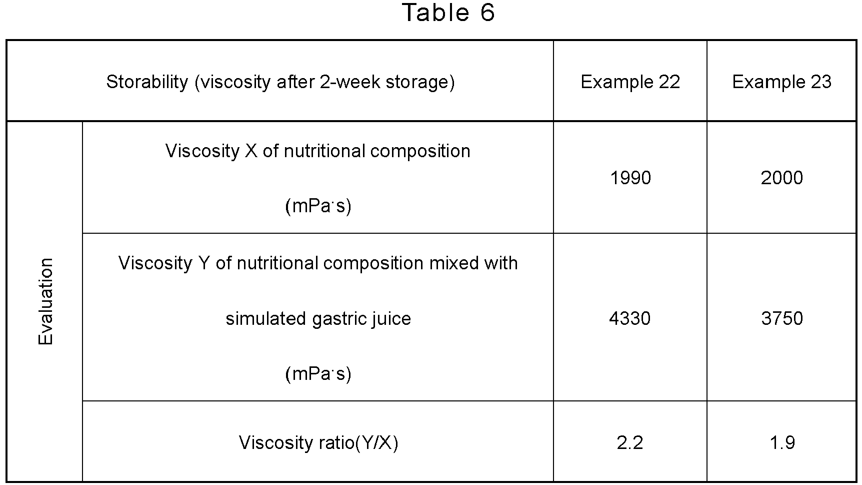

The above results show that, in Examples 1 to 23, the viscosity ratio (Y/X) (wherein X represents the viscosity of the nutritional composition and Y represents the viscosity of the nutritional composition after mixed with simulated gastric juice) is 0.8 or more, regardless of using a lot of casein as protein sources, and therefore the viscosity of the nutritional composition under acidic (intragastric) condition does not significantly decrease, and moderate viscosity is provided. Accordingly, it was found that the compositions of Examples 1 to 23 are excellent nutritional compositions. Moreover, the above excellent effect was not impaired even after the storage of 2 weeks. Therefore, the nutritional compositions of the present embodiments are also excellent in storability.

On the other hand, it was found that Comparative Examples 1 to 7, in which any one of the components (A), (B), and (C) is not contained, are unsuitable as a nutritional composition, or had problems such as rapid viscosity decrease under the acidic

### (intragastric) condition, and the like.

While specific forms of the embodiment of the present invention have been shown in the above Examples. However, the Examples are merely illustrative, and should not be construed as limitative. It is contemplated that various modifications apparent to those skilled in the art are within the scope of the invention.

### INDUSTRIAL APPLICABILITY

The present nutritional composition has a form easily administered or ingested, and is useful as a nutritional composition for enabling efficient nutrient absorption.

## Claims

1. A nutritional composition comprising casein, collagen, and a thickener, wherein
the thickener is not gelled by cooling after heating, and is acid-soluble.

2. The nutritional composition according to claim 1, wherein the thickener is at least one selected from the group consisting of tamarind gum, succinoglycan, tara gum, guar gum, locust bean gum, xanthan gum, and pectin.

3. The nutritional composition according to claim 1 or 2, which is liquid or semi-solid.

4. The nutritional composition according to any one of claims 1 to 3, which has a pH of 5.5 to 7.5.

5. The nutritional composition according to any one of claims 1 to 4, wherein
when a viscosity of the nutritional composition is defined as "X", and a viscosity of the nutritional composition mixed with simulated gastric juice is defined as "Y", "Y/X" is 0.8 or more.

6. The nutritional composition according to any one of claims 1 to 5, further comprising agar.

7. The nutritional composition according to any one of claims 1 to 6, which has a viscosity of 5 to 50000 mPa·s at 25°C.

8. The nutritional composition according to any one of claims 1 to 7, wherein a caseinate is used as the casein.

9. The nutritional composition according to any one of claims 1 to 8, further comprising at least one selected from the group consisting of a protein other than the casein and the collagen, a modified starch, a lipid, a saccharide, a vitamin, a mineral, and a dietary fiber.

10. The nutritional composition according to any one of claims 1 to 9, wherein the thickener is succinoglycan.
